# EUROPEAN PATENT APPLICATION

(11) **EP 0 984 586 A2**
(43) Date of publication of application: **08.03.2000**
(21) Application number: 99306867.5
(22) Date of filing: 27.08.1999
(51) Int. Cl.: H04L 12/26

(54) **Method for monitoring events and a data stucture for such events**

(30) Priority: 01.09.1998 US 98698 P; 05.01.1999 US 114760 P; 19.05.1999 US 315086
(71) Applicant: Sarnoff Corporation, Princeton, NJ 08540-6449 (US)
(72) Inventor: Ward, Christopher, Glen Ridge NJ 07028 (US); Pecota, Clifford, A., Lebanon, NJ 08833 (US); Highes, Gary, Chelmsford, MA 01824 (US)
(74) Representative: Pratt, Richard Wilson

(57) **Abstract**

A method of monitoring events in a digital television studio. The event monitoring protocol uses a object-based control system wherein any studio component (or object associated therewith) forms an observer that may request certain events to be sent through an event channel to the observer. The observer sends a defined data structure to establish and define the type of event to be monitored. The event structure includes an action field, a basis field, and a condition field. The action field defines the action that is to occur when the event occurs, e.g., notify the observer, turn on power, send warning, and the like. The basis field defines the cause of the event, e.g., tape ends, power is off, and the like. The condition field establishes conditions on the basis such that both the condition and the basis must be fulfilled (i.e., be TRUE) for the action to be performed. When the event occurs, i.e., the basis and condition(s) are fulfilled and the action is performed, the event generator or sender, produces an event message that is propagated through the event channel to the observer. The event message communicates the time of the event, the type of event, the severity of the event, event categorization information, and any parameters that are associated with the event that may be required by the observer.

## Description

The present invention relates to a method for monitoring events and a data structure for such events.

### BACKGROUND OF THE INVENTION

In the context of computer communications protocols, an event channel is a conduit for communicating asynchronous event notifications from a sender (server) to one or more observers (clients). Generally, the server and clients are connected to one another by a computer network, e.g., Ethernet, or a serial data connection, e.g., RS-422. Each sender generates a specific set of events which are triggered by software or hardware conditions within the server. As events occur, they are propagated to the observer.

In a distributed system, there is a propagation delay between the time an event occurs and the time that the observer receives the event. If the propagation delay is too large, the observers may not be able to respond to events in a timely fashion. Furthermore, certain types of event senders may produce events with such frequency that the distributed system in not able to dispatch them rapidly enough due to bandwidth limitations of the communications network.

One such distributed system is a digital television studio. A digital television studio contains a plurality of interconnected, but independently operating, components that facilitate information distribution and processing within the studio. The information contains digital video signals that are to be processed, and ultimately combined to form a digital stream that can be broadcast or otherwise distributed to viewers. Most of the components of a digital television studio digitally process the signals; however, some analog components may also be used.

Although the digital television signals are routed from one component of the studio to another, there is no standardized command and control protocol that enables events occurring within the studio to be monitored either at a central location or amongst the components. One monitoring technique for a digital television studio uses a simple RS-422 serial interface that is coupled to each component of the studio and periodically polled by a central monitoring system to collect event information. As such, the central monitoring system monitors the operation of the components of the studio.

Therefore, there is a need in the art for a method for monitoring events within a digital television studio.

### SUMMARY OF THE INVENTION

According to a first aspect of the present invention there is provided a method of monitoring events comprising the steps of:
establishing an event sender and an event observer;
defining an event structure having an action field and a basis field; and
whenever the basis field content is fulfilled, performing an action defined in the action field.

According to a second aspect of the present invention there is provided a data structure, stored in a computer readable medium, that defines an event comprising:
an action field;
a basis field; and
a condition field.

The disadvantages of the prior art are overcome by a method of monitoring events in a digital television studio that uses a unique event grammar to facilitate event communication. The event monitoring protocol uses an object-based control system wherein any studio component (or object associated therewith) may form an observer that may request certain events to be sent through an event channel to the observer. The observer sends a defined data structure using a unique event grammar to establish and define the type of event to be monitored and acted upon by an event sender. The event data structure includes an action field, a basis field, and a condition field. The action field defines the action that is to occur when the event occurs, e.g., notify the observer, turn on power, send warning, and the like. The action field may contain a script that is executed by the event sender to perform a number of actions within the component associated with the event sender. The basis field defines the cause of the event, e.g., tape ends, power is off, and the like. The condition field establishes conditions for the basis such that both the condition and the basis must be fulfilled (i.e., be TRUE) for the action to be performed. When the event occurs, i.e., the basis and condition(s) are fulfilled and the action is performed, the event sender object produces an event message that is propagated through the event channel to the observer. The event message communicates the time of the event, the type of event, the severity of the event, event categorization information, and any parameters that are associated with the event that may be required by the observer. Although a studio component may be designed to generate many events, the sender object filters the events and notifies the observer of only those which the observer has requested information.

Embodiments of the present invention generally relate to command and control functions in a digital television studio and, more particularly, to a method and apparatus for event monitoring within a digital television studio.

### BRIEF DESCRIPTION OF THE DRAWINGS

For a better understanding of the present invention, reference will now be made, by way of example, to the accompanying drawings, in which:
FIG. 1 depicts a simplified block diagram of a digital television studio having a distributed object system for monitoring events within the studio; and
FIG. 2 depicts a flow diagram of the process used to establish an event channel between an event sender and an event observer.

### DETAILED DESCRIPTION

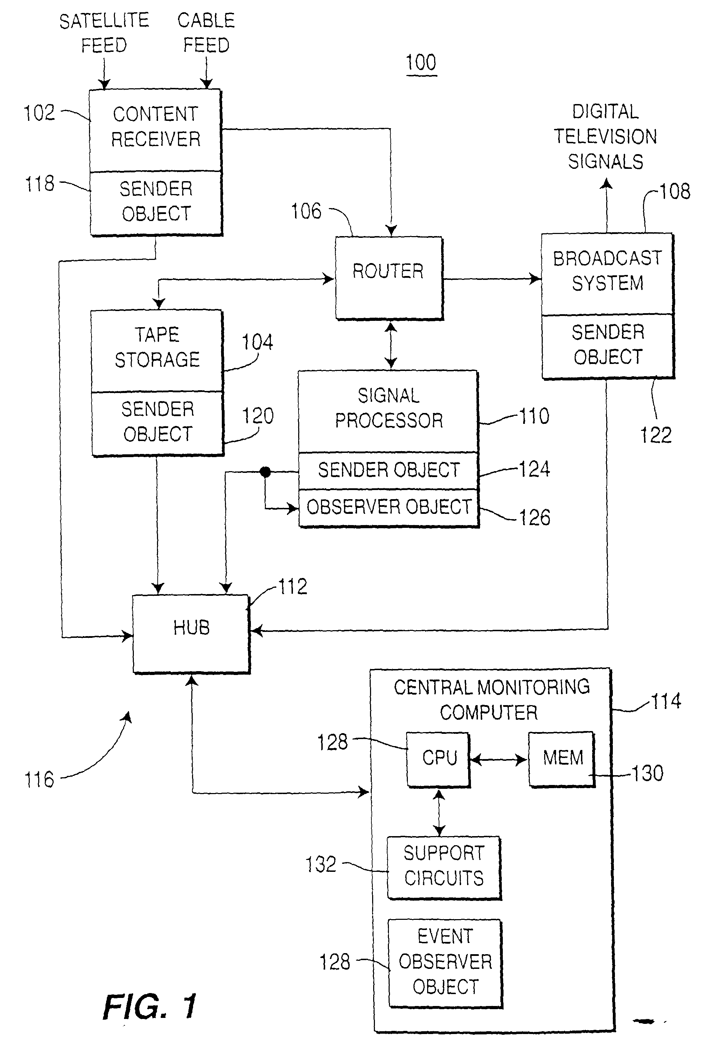

FIG. 1 depicts a simplified block diagram of a digital television studio 100. The studio 100 comprises a plurality of studio components including, for example, a content receiver 102, tape storage 104, signal processing devices 110, a broadcast system 108 and the like. These components are interconnected through a digital router 106 to facilitate processing and broadcast of digital television signals such as high definition or standard definition television signals. Besides the interconnection of the components for distribution of video signals, a digital studio command and control (DS-CC) system 116 communicates command and control information amongst the various components. The DS-CC system 116 is a distributed object system having software objects 118, 120, 122, 124, 126, and 128 that are either directly executed by the components or are associated with the components. A central monitoring computer 114 may be provided within the DS-CC system 116 to enable a user to control as well as monitor the operation of the various components of the studio 100. The DS-CC system 116 establishes event channels between the various objects within the system. In general, a component could execute any object and become either an event observer or an event sender depending upon a particular application for the object at a given time.

In the embodiment shown, the content receiver 102, the broadcast system 108, the tape storage 104 and the signal processor 110 each have an associated sender object, while the central monitoring computer 114 and the signal processor 110 support sender and observer objects. The objects communicate with one another through a network communication system, e.g., Ethernet, having a hub 112.

The central monitoring computer 114 comprises a central processing unit (CPU) 128, a memory 130 and support circuitry 132. The CPU is a general purpose processor that becomes a specific purpose processor when executing software programs that are stored in memory 130. The memory 130 may be a combination of RAM, ROM, disk storage, or any other form of digital storage that is used for storing data and programs in a computer. The support circuitry 132 may include well-known circuits such as clock circuits, I/O registers, cache, and the like.

An event channel in the DS-CC system 116 is a mechanism by which many observer objects 126 and 128 are able to observe the state of another object 118, 120, 122, 124 and are notified of any changes that occur in the observed component. The use of event channels permits a decoupling of activity between the observed objects and their observers. The event channel mechanism of the present invention provides a method to observe the state of another object without using component polling, which increases the system overhead.

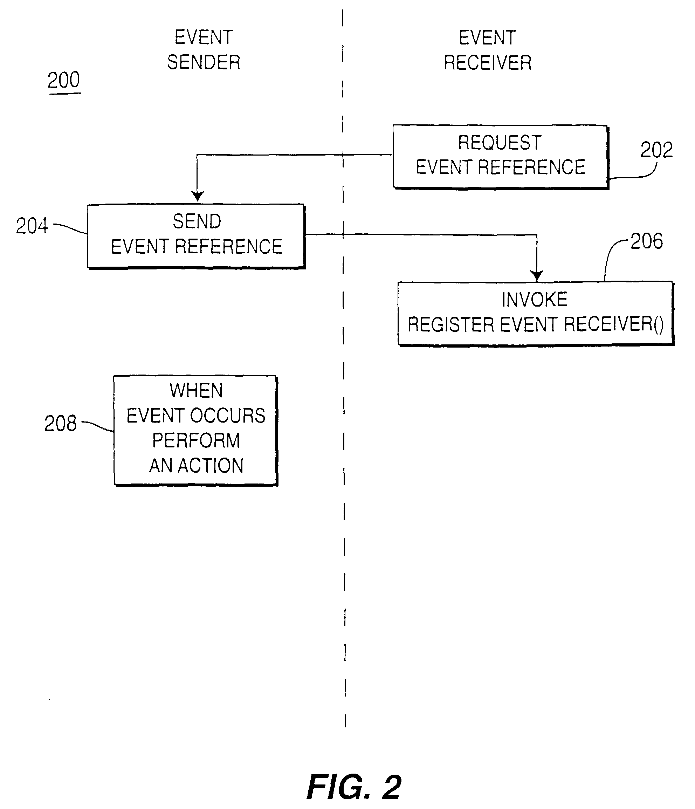

FIG. 2 is a flow diagram that illustrates a process 200 for establishing an event channel between cooperating Event Senders (sender objects) and Event Receivers (observer objects). The Event Sender is associated with the observed component. The Event Receiver is the observing component. At step 202, the Event Receiver indicates its interest in receiving events by invoking the RegisterEventReceiver() or the Event Sender Object. The Event Sender responds, at step 204, with an event reference. After obtaining a reference to the observed object's Event Sender, the Event Receiver invokes, at step 206, a RegisterEventReceiver() method (an executable program). Once the observing object is registered, the Event Sender waits for the registered event to occur. When the registered event occurs at step 208, the Event Sender performs an action such as notifying the Event Receiver of the occurrence. The event that triggers the action and the action itself are defined using an event grammar that is discussed in detail below.

Event Senders may be named or unnamed. The default Event Sender for a given studio component, e.g., the tape storage 104 of FIG. 1, is unnamed and all events generated by the component will be sent to the default Event Sender. A component may also create named Event Senders that may carry a subset of events generated by the component and/or events received by the component from other components.

All studio components are required to support Event Channels. A well-behaved component will generate event messages for any state change that affects its externally visible state or behavior. However, only a subset of the events that are generated by an observed component are communicated to the observer. The events that are sent must fulfill a definition for an event that the observer wishes to monitor.

Once established, Event Channels are used to send Event Messages using an event message structure. The Event Message structure contains the elements shown in Table 1.

**Table 1**

| Event Message Structure | |
|---|---|
| **Time** | Studio time the event was generated (DATE_TIME structure). |
| **requestID** | The request number, if any, associated with the event. |
| **exprID** | Expression identifier, used by extended event channels |
| **Source** | A string identifying the source of the Event Message. This should be the objects 'address' in the studio name hierarchy. |
| **Severity** | An enumerated type with the values FATAL, ERROR, WARNING and INFORMATION. |
| **Class*** | A numeric value indicating the class or category of event (for example, device events and network events would be distinct message classes) |
| **Type*** | A numeric value indicating the specific event type within the class. |
| **Params**** | Any parameters required to further describe the event. Note that for defined event types, this field does NOT contain the event text. |

| | |
|---|---|
| *Event class and type values are defined by a registration authority such as the Society of Motion Picture and Television Engineers (SMPTE) and included in the definition files for DS-CC. Specific ranges of values are reserved as "User Defined" to allow application specific events to be processed. Specific values are also reserved for events that are undefined. | |
| **For defined events the consumer of the Event Message is expected to obtain any associated text message independently of the message. For example, it may read the event text from a local file indexed by event class and type. This allows messages to be localized at the point of display. For the specific case of undefined messages, the "Params" field may include an event text string. | |

Using an event message, an Event Sender may communicate critical information regarding the event's occurrence to the observer. As such, the event time of occurrence is sent along with the object's identification, the event identification, the severity of the event, event categorization information, and the event parameters that are required by the observer.

The event channels provide a conduit for passing asynchronous event notifications from a sender to one or more observers. Each sender generates a specific set of events that are triggered by software or hardware. As events occur, they are propagated to each observer. The present invention allows the user to specify event behaviors, such as the conditions under which an event message is propagated. In addition, behaviors can include actions to be performed by the Event Sender or its associated studio component in response to specified events. This mechanism provides several benefits including:
- An Event Sender can handle specified event responses automatically;
- Event Receiver applications receive only notifications in which they are interested;
- Event Receiver code is simplified because it does not need to filter events; and
- network traffic is reduced since unwanted events are never generated and transmitted.

As discussed with respect to FIG. 2 above, before an Event Receiver application can register as an observer, it must first acquire a handle to an EventSender object. Once an EventSender object has been acquired, the Event Receiver can register and unregister for events using RegisterReceiver() and UnregisterReceiver() methods. These methods of registering and unregistering objects to send and receive events are well known in the computing arts.

An event expression describes both the conditions under which an event is generated and the actions taken in response to the event. An event grammar describes the legal syntax of event expressions. The semantics of an event expression are partially determined by the event channel generating the events since each event channel must document the allowable set of non-terminals and their relationships. Certain non-terminals are common to all event expressions and are included in the grammar. Not all elements of the grammar are required for a conforming implementation. In particular, an event channel can implement certain allowable grammar subsets relating to conditional expressions. An event expression is valid only if it meets both the syntactic and semantic requirements.
Event expressions have the following format:
ACTION BASIS CONDITION where:
ACTION specifies the action to be taken. The action may be specified using a function call syntax which allows arguments that are evaluated at the time of the event.
BASIS specifies a basis condition. Once the basis condition is met, the condition clause is evaluated. If the condition evaluates to true, then the action is performed. The use of a basis condition allows the implementation to minimize the resources required to trigger an event.
CONDITION specifies additional conditions to check once the basis condition is met.

For an event to be triggered, first the basis condition must be met. Once the basis condition is met, then the additional conditions are checked once. If they evaluate to true, then the event is triggered and the action is taken. Otherwise the event is not triggered. The following are some sample event expressions:

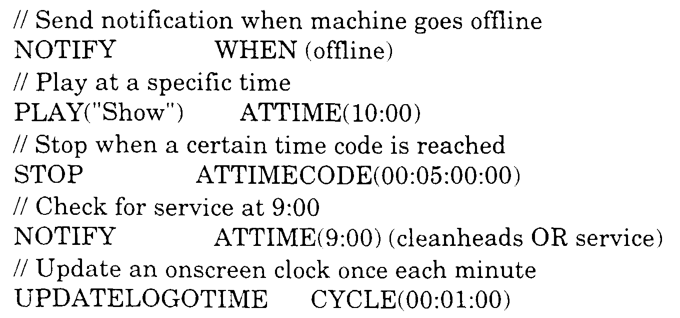

An Event Sender allows a registered observer to add and remove event expressions using the SetEventExpression() and ClearEventExpression() methods. The following pseudocode example illustrates this process (exception handling code has been removed for clarity): 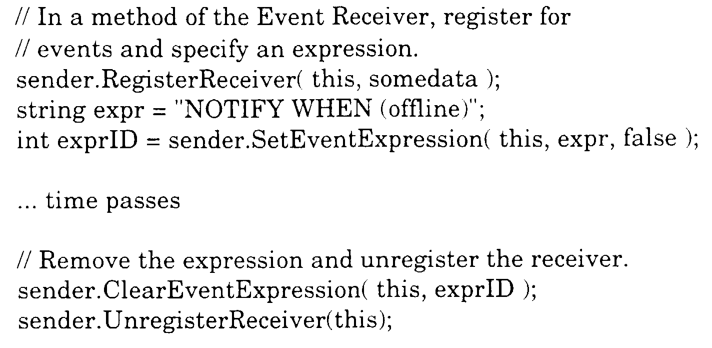 The function int SetEventExpression( EventReceiver receiver, string expr Boolean remove ) raises(EventException) adds an event expression for an Event Receiver. The maximum number of event expressions that can be associated with an Event Receiver can be determined by calling GetCapabilities() which is a function that requests the sender to provide its capabilities to the Event Receiver. The portions of the SetEventExpression function are as follows:
receiver - the EventReceiver with which the event expression is to be associated. If the receiver has not been successfully registered by calling RegisterReceiver() or the maximum number of event expressions for the receiver has been exceeded, an exception is indicated.
expr - the event expression to be added for the receiver. If the expression has syntax or semantic errors an exception is indicated.
remove - if this value is true, the event expression is removed after the basis condition has been met (regardless of whether the event is actually generated). Otherwise, the expression must be removed by the client.
This function returns an ID value that can be used to identify the expression in a subsequent call to ClearEventExpression().

The function void ClearEventExpression( EventReceiver receiver, int id ) raises(EventException) removes an event expression associated with an event receiver. This function has the following fields:
**receiver** - the EventReceiver with which the expression to remove has been associated. If the receiver has not been successfully registered by calling RegisterReceiver(), an exception is indicated.
**id** - the event expression to remove. This value must have been returned by a previous call to SetEventExpression(), otherwise an exception is indicated.

Once an event expression has been registered, an Event Receiver can receive notifications. The Event Sender performs the defined action whenever an event expression evaluates to true. In many instances, the action includes notifying the Event Receiver of the event occurrence.

The Event Sender will apply event expressions on a per-Event Receiver basis. That is, filters specified by one Event Receiver do not affect delivery of event messages by the same Event Sender to other registered Event Receivers.

The following is a sample grammar of an event expression that can be used in accordance with the present invention.
event-expression:
*action basis condition*_{*opt*}
where:
*action:*
**NOTIFY**
*event-channel-specific-action*
*event-channel-specific-action:*
defined on an event channel specific basis.
*basis:*
**WHEN**
*event-channel-specific-basis*
*event-channel -specific-basis:*
defined on an event channel specific basis.
*condition:*
*expression*
A conforming implementation can implement one of three expression grammars. Each successive grammar provides additional operators and is a strict superset of the previous grammar. Multiple expression grammars are specified to allow implementations to implement the required level of complexity.

The simplest expression grammar only allows the use of AND, OR and NOT operators. This has the consequence that all event channel specific literals are of type Boolean. The following expression grammar is an example of the simplest grammar.
*expression:*
*or-expression*
*or-expression:*
*and-expression*
*or-expression* **OR** *and-expression*
*and-expression:*
*unary-expression*
*and-expression* **AND** *unary-expression*
*unary-expression:*
*primary-expression*
**NOT** *unary-expression*
*primary-expression:*
literal
( *expression )*
*literal:*
*boolean-constant*
*event-message-literal*
*event-channel-specific-literal*
*boolean-constant:*
**true**
**false**
*event-message-literal:*
isFatal
isError
isWarning
isInformation
*event-channel-specific-literal:*
defined on an event channel specific basis.
The second grammar adds support for relational and equality operators. In addition, it adds an integer literal. Use of relational and equality operators allows for comparison of event channel specific types. The following expression grammar is an example of the second grammar.
*expression:*
*or-expression*
*or-expression:*
*and-expression*
*or-expression* **OR** *and-expression*
*and-expression:*
*equality-expression*
*and-expression* **AND** *equality-expression*
*equality-expression:*
*relational-expression*
*equality-expression = relational-expression*
*equality-expression* != *relational-expression*
*relational-expression:*
*unary-expression*
*relational-expression* < *additive-expression*
*relational-expression* > *additive-expression*
*relational-expression* <= *additive-expression*
*relational-expression* <= *additive-expression*
*unary-expression:*
*primary-expression*
**NOT** *unary-expression*
*primary-expression:*
*literal*
( expression )
*literal:*
*integer-constant*
*boolean-constant*
*event-message-literal*
*event-channel-specific-literal*
*integer-constant:*
*non-zero-digit*
*integer-constant digit*
*digit:* one of
**0 1 2 3 4 5 6 7 8 9**
*non-zero-digit:* one *of*
**1 2 3 4 5 6 7 8 9**
*boolean-constant:*
**true**
**false**
*event-message-literal:*
msgtime
msgrequestID
msgexprID
msgsource
msgseverity
msgclass
msgtype
msgparams
isFatal
isError
isWarning
isInformation
*event-channel-specific-literal:*
defined on an event channel specific basis.
The third level of grammar support adds mathematical operators, function calls, and a member operator. It allows for event channel specific types and surfacing of complex functionality. The following expression grammar is an example of the third type of grammar.
*expression:*
*or-expression*
*or-expression:*
*and-expression*
*or-expression* **OR** *and-expression*
*and-expression:*
*equality-expression*
*and-expression* **AND** *equality-expression*
*equality-expression:*
*relational-expression*
*equality-expression* **=** *relational-expression*
*equality-expression* **!=** *relational-expression*
*relational-expression:*
*additive-expression*
*relational-expression* < *additive-expression*
*relational-expression* > *additive-expression*
*relational-expression* <= *additive-expression*
*relational-expression* <= *additive-expression*
*additive-expression:*
*multiplicative-expression*
*additive-expression* **+** *multiplicative-expression*
*additive-expression* **+** *multiplicative-expression*
*multiplicative-expression:*
*unary-expression*
*multiplicative-expression * unary-expression*
*multiplicative-expression* / *unary-expression*
*multiplicative-expression* **MOD** *unary-expression*
*unary-expression:*
*postfix-expression*
**NOT** *unary-expression*
*postfix-expression:*
*primary-expression*
*postfix-expression . identifier*
*identifier ( expression-list*_{*opt*} *)*
*expression-list:*
*expression*
*expression-list , expression*
*primary-expression:*
*literal*
*( expression )*
literal:
*integer-constant*
*boolean-constant*
*event-message-literal*
*event-channel-specific-literal*
*identifier*
*integer-constant:*
*non-zero-digit*
*integer-constant digit*
*digit:* one of
**0 1 2 3 4 5 6 7 8 9**
*non-zero-digit:* one of
**1 2 3 4 5 6 7 8 9**
*boolean-constant:*
**true**
**false**
*event-message-literal:*
msgtime
msgrequestID
msgexprID
msgsource
msgseverity
msgclass
msgtype
msgparams
isFatal
isError
isWarning
isInformation
*event-channel-specific-literal:*
*defined on an event channel specific basis.*

Using these grammars provides a flexible process for defining events that are monitored in a distributed object system such as a digital television studio.

Although various embodiments which incorporate the teachings of the present invention have been shown and described in detail herein, those skilled in the art can readily devise many other varied embodiments that still incorporate these teachings.

## Claims

1. A method of monitoring events comprising the steps of:
establishing an event sender and an event observer;
defining an event structure having an action field and a basis field; and
whenever the basis field content is fulfilled, performing an action defined in the action field.

2. The method of claim 1 wherein said event sender and event observer are objects in a distributed object system.

3. The method of claim 2 wherein the distributed object system is a digital television studio.

4. The method of claim 1 wherein the event structure further comprises a condition field, and both the basis field and the condition field must be fulfilled to perform the action.

5. The method of claim 4 wherein the condition field contains relational terms.

6. The method of claim 4 wherein the condition field contains arithmetic operators.

7. The method of claim 1 further comprising the step of communicating an event message between said observer and the sender.

8. The method of claim 7 wherein said event message comprises an event time, an event identifier, an event source, event severity, event categorization information, and event parameters.

9. A data structure, stored in a computer readable medium, that defines an event comprising:
an action field;
a basis field; and
a condition field.

10. A computer program product for carrying out the method as claimed in any one of claims 1 to 8.
